# EUROPEAN PATENT APPLICATION

(11) **EP 4 296 948 A1**
(43) Date of publication of application: **27.12.2023**
(21) Application number: 22180131.9
(22) Date of filing: 21.06.2022
(51) Int. Cl.: G06T 7/73

(54) **METHOD FOR DETERMINING A VESSEL-WATER INTERFACE, AND METHOD AND SYSTEM FOR DETERMINING A POSITIONAL RELATIONSHIP BETWEEN AN EGO VESSEL AND A TARGET VESSEL**

(71) Applicant: ABB SCHWEIZ AG, 5400 Baden (CH)
(72) Inventor: ARSENALI, Bruno, 5200 Brugg (CH); MARANO, Stefano, 8050 Zurich (CH); MAAS, Deran, 8046 Zurich (CH)
(74) Representative: Qip Patentanwälte Dr. Kuehn & Partner mbB

(57) **Abstract**

A method for determining a vessel-water interface (40) between at least one target vessel (34) and a water surface (22) of a waterbody, on which the target vessel (34) sails, from an image (20) showing the target vessel (34) on the waterbody, the method comprising: determining interface values for pixels of the image (20), the interface values being representative for a probability of the corresponding pixels showing the vessel-water interface (40) or not; determining bounding box data of a bounding box (32) surrounding the target vessel (34) within the image (20) from the image data; and determining vessel-water interface data, the vessel-water interface data being representative for a position and extension of the vessel-water interface (40) within the image (20), depending on the determined interface values and the bounding box data.

## Description

### FIELD OF THE INVENTION

The invention relates to the field of vessel-water interface detection and maritime range and bearing measurement. In particular, the invention relates to a method for determining a vessel-water interface, and to a method and a system for determining a positional relationship between an ego vessel and a target vessel.

### BACKGROUND OF THE INVENTION

Autonomous solutions are expected to transform the world of international shipping. One or more cameras as sensors for gathering real-world information may play a crucial role in the development of these solutions, e.g. because any vessel, i.e., a ship or boat, may be operated successfully by relying on visual perception. When it comes to vision, monocular systems may be more attractive than stereo systems, e.g. due to the low complexity and price compared to the stereo systems. However, when it comes to the localization of vessels, e.g. including a range to an ego vessel, i.e., an own vessel, and/or a bearing estimation for the target vessel, i.e., another vessel, monocular systems may be limited to the localization of points along the ground plane, i.e., points on a water surface of a waterbody the vessels are sailing on. As the extraction of these points may be challenging, some methods known in the art assume that the vessel-water interface is aligned with a lower edge of a bounding box generated by an object detection algorithm configured to detect vessels in images. Another common assumption in the art may be that a midpoint of the lower bounding box edge is on the vessel-water interface. However, these assumptions may introduce an inaccuracy and there may be applications for which the vessel-water interface may have to be determined more accurately, e.g., if the determined vessel-water interface may be used for determining a positional relationship between the ego vessel and the target vessel, e.g., a range, in other words a distance, between the ego vessel and the target vessel and/or a bearing of the target vessel .

Therefore, there is a need for more accurate methods for determining a vessel-water interface in an image and/or for determining the positional relationship between the ego vessel and the target vessel.

### DESCRIPTION OF THE INVENTION

It is an objective of the present invention to provide a method for determining a vessel-water interface between at least one target vessel and a water surface of a waterbody, which is very accurate, and/or which may be carried out in an easy, simple, and/or cost-efficient way, and/or which may enable to determine a positional relationship between the target vessel and an ego vessel very accurately.

It is an obj ective of the present invention to provide a method for determining a positional relationship between the ego vessel and the target vessel in the waterbody, which is very accurate, and/or which may be carried out in an easy, simple, and/or cost-efficient way.

It is an objective of the present invention to provide a system for determining the positional relationship between the ego vessel and the target vessel in the waterbody, which is very accurate, and/or which may be operated in an easy, simple, and/or cost-efficient way.

These objectives are achieved by the subject-matter of the independent claims. Further exemplary embodiments are evident from the dependent claims and the following description.

An objective is achieved by a method for determining a vessel-water interface between at least one target vessel and a water surface of a waterbody, on which the target vessel sails, from an image showing the target vessel on the waterbody, the method comprising: receiving image data of the image; determining interface values for pixels of the image, the interface values being representative for a probability of the corresponding pixels showing the vessel-water interface or not; determining bounding box data of a bounding box surrounding the target vessel within the image from the image data; and determining vessel-water interface data, the vessel-water interface data being representative for a position and extension of the vessel-water interface within the image, depending on the determined interface values and the bounding box data.

The bounding box data may be determined before, after, or at the same time as the interface values. If there are more than one target vessel in the image, correspondingly more bounding boxes may be determined, e.g., one for each target vessel. In this context, determining the bounding boxes enables to separate two distinct target vessels from each other, in particular if these vessels overlap each other within the image, or to differentiate between a buoy and the vessel. Preferably, the bounding box data are determined such that the target vessel exactly fits into the corresponding bounding box, as it is usual for bounding boxes determined by object detection algorithms or by instance segmentation as they are known in the art.

Determining the interface values and determining the vessel-water interface data depending on the interface values and the bounding box data enables a very accurate determination of the vessel-water interface and may be carried out in an easy, simple, and/or cost-efficient way. As a consequence, the above method enables to determine a positional relationship between the target vessel and an ego vessel very accurately, as explained below.

The waterbody may be a lake, an ocean, a sea, or a river. The image data may be received by the entity carrying out the above method. The entity may be a general-purpose computer, e.g. on the ego vessel, or a system for determining a positional relationship between the ego vessel and the target vessel on the image.

Preferably, at least one interface value is determined for each of the pixels of the image. The interface values may be probability values reaching from 0 to 1 or from 0% to 100%. Alternatively, the interface values may be convertible from or to these probability values and may reach from 0 to 1, from 0 to 10, from -5 to 5, or from negative to positive infinity, for example. The interface values may be presented in form of one interface value per pixel. For example, if the interface values range from 0 to 1, a threshold may be set at 0.5 with all pixels having an interface value larger than 0.5 being representative of the corresponding pixel showing the vessel-water interface and with all pixels having an interface value of 0.5 or smaller being representative of the corresponding pixel not showing the vessel-water interface. It has to be noted that the above ranges and threshold are examples only and that other ranges and/or thresholds may be set in order to distinguish pixels showing the the vessel-water interface from pixels not showing the vessel-water interface.

The interface values may be determined by a semantic segmentation of the image and optionally by post-processing an output of the semantic segmentation. The semantic segmentation may be carried out by a neural network. The neural network may be trained and/or configured such that the neural network puts out vessel-water values which represent the probabilities of the corresponding pixels of the image showing the target vessel, the water, or none of both, e.g., void, sky, land, etc. These vessel-water values may be modified by one or more post-processing steps such that the modified output of the neural network represents the probabilities of the corresponding pixels showing the vessel-water interface or not, wherein in this embodiment the modified vessel-water values corresponds to the interface values. This neural network may be referred to as first neural network in the following. The first neural network may be trained by a training dataset comprising image data of an amount of images showing vessels on waterbodies, wherein the vessels and the water surfaces of the corresponding waterbodies are labelled within the images.

Alternatively, the neural network may be trained and/or configured such that the output of the neural network may directly represent the probabilities of the corresponding pixels showing the vessel-water interface or not, wherein in this embodiment the output of the neural network directly corresponds to the interface values. So, no post-processing of the output of the neural network is necessary for achieving the interface values in this embodiment. This neural network may be referred to as second neural network. The second neural network may be trained by a training dataset comprising image data of an amount of images showing vessels on waterbodies, wherein the vessel-water interfaces are labelled within the images. As an alternative to using the amount of images for training the neural networks, the neural networks may be trained by one-shot learning, as it is known in the art.

According to an embodiment, the interface values are interpreted as costs or rewards and the vessel-water interface data are determined by minimizing the costs or, respectively, by maximizing the rewards. The costs may be minimized or, respectively, the rewards may be maximized by a seam finder module, wherein the interface values may be used as an input for the seam finder module. The vessel-water interface data may comprise x-y-coordinates, or pairs of column and row numbers of the pixels of the image showing the vessel-water interface within the image. The seam finder module may for example use dynamic programming or one of other methods, such as those from graph theory, e.g., Dijkstra's algorithm, for determining the vessel-water interface data, as they are known in the art.

According to an embodiment, the interface values form an array of interface values, with positions of the interface values within the array corresponding to positions of the corresponding pixels within the image, and the costs and the rewards each refer to a sum of the interface values of all pixels which are necessary to pixel-wisely go from one lateral side of the array corresponding to one lateral side of the bounding box to another lateral side of the array corresponding to another lateral side of the bounding box. Figuratively speaking, the seam finder module may run from the one lateral side to the other lateral side of the bounding box in order to minimize the costs or to maximize the rewards. The one lateral side may correspond to the left side of the bounding box and the other lateral side may correspond to the right side of the bounding box. In other words, the seam finder module may search for the cheapest way from the left side of the bounding box to the right side of the bounding box, when calculating the costs, or may search for the most valuable way from the left side of the bounding box to the right side of the bounding box, when calculating the rewards, wherein the result is interpreted as the vessel-water interface. Alternatively, the seam finder module may run from the right to the left side of the bounding box.

According to an embodiment, the bounding box data are determined by an object detection algorithm configured for detecting vessels in images; and determining the vessel-water interface data per determined bounding box. The object detection algorithm may be any object detection algorithm known in the art which is able to detect vessels in images. In particular, the object detection algorithm may be another neural network which has been trained to detect vessels in images by a training dataset comprising an amount of images showing vessels, in particular vessels on corresponding waterbodies. The object detection algorithm for determining the bounding box data may be referred to as third neural network in the following.

Alternatively, according to another embodiment, the bounding box data are determined by instance segmentation. In this case, the bounding box data may be extracted from the output of the instance segmentation, as described later.

As an alternative to the first or second neural network using semantic segmentation for determining the vessel-water values or, respectively, the interface values in one step and the third neural network or the instance segmentation for determining the bounding box data in another step, the first and/or second neural network may use panoptic segmentation which enables determining the vessel-water values or, respectively, the interface values and the bounding box data in one step and/or by the corresponding neural network only, in particular without the need for the third neural network or the instance segmentation.

According to an embodiment, the method further comprises, after receiving the image data and before determining the vessel-water interface data, determining the vessel-water values for the pixels of the image from the image data, the vessel-water values being representative for the probability of the corresponding pixels showing the target vessel, the waterbody, or none of both, i.e., void, sky, land etc.; and determining the interface values from the vessel-water values. In particular, the vessel-water values may be modified by one or more post-processing steps, wherein the input for this post-processing are the vessel-water values and the output of this post-processing are the interface values. Alternatively, the vessel-water values may be used as an input for another neural network, referred to as fourth neural network in the following, with the fourth neural network determining the interface values from the vessel-water values. The vessel-water values may be determined by semantic segmentation or panoptic segmentation of the image.

The semantic segmentation or panoptic segmentation outputting the vessel-water values may be carried out by the first neural network. The vessel-water values may be presented in form of a triplet of three vessel-water values per pixel, wherein a first vessel-water value having a first index within the triplet may be representative for the probability of the corresponding pixel showing neither water nor vessel, wherein a second vessel-water value having a second index within the triplet may be representative for the probability of the corresponding pixel showing the water surface, and wherein a third vessel-water value having a third index within the triplet may be representative for the probability of the corresponding pixel showing the target vessel. Preferably, at least one vessel-water value is determined for each pixel of the image. The vessel-water values may be probability values reaching from 0 to 1 or from 0% to 100%. Alternatively, the vessel-water values may be convertible from or to these probability values and may reach from 0 to 1, from 0 to 10, from -5 to 5, or from negative to positive infinity, for example

The first neural network may be trained in advance by supervised learning using a training dataset of image data of an amount of images showing vessels on waterbodies, and by the images being labelled with respect to the corresponding vessels and waterbodies. In case of the fourth neural network determining the interface values from the vessel-water values outputted by the first neural network, the fourth neural network may be trained in advance by supervised learning using a training dataset comprising a huge amount of arrays of vessel-water values, e.g., determined by the first neural network from the image data, and by the arrays being labelled with respect to the vessel-water values corresponding to those pixels of the image showing the vessel-water interfaces.

Alternatively, in case of the second neural network determining the interface values directly from the image data, the second neural network may be trained in advance by supervised learning using a training dataset of image data of an amount of images showing vessels on waterbodies, and by the images being labelled with respect to the corresponding vessel-water interfaces. In particular, the second neural network may be trained such that only a physical vessel-water interface may be determined as the vessel-water interface by correspondingly labelled images. So, a virtual vessel-water interface shown in the image but not corresponding to a real-world vessel-water interface may be not determined as being the vessel-water interface by the correspondingly trained second neural network. Instead of using supervised learning by an amount of training data, one or more machine learning approaches may be used for training the one or more of the above neural networks that do not require a huge amount of training data, in particular image data or vessel-water values, e.g., such as one-shot learning as it is known in the art.

According to an embodiment, the method further comprises, after receiving the image data and before determining the vessel-water interface data, determining edge values for the pixels of the image, the edge values being representative for the corresponding pixels showing an edge within the image or not, and determining the vessel-water interface data depending on the edge values. This may contribute to increase the accuracy of the vessel-water interface data. The edge values may be determined by any image processing algorithm configured for edge detection, as they are known in the art.

According to an embodiment, the vessel-water interface data are determined depending on the edge values by pixel-wisely multiplying the interface values with the corresponding edge values and by determining the vessel-water interface data depending on the corresponding products.

According to an embodiment, the method further comprises determining all pixels, whose corresponding interface values are below a predetermined threshold, as not showing the vessel-water interface. Thus, before outputting the position and extension of the vessel-water interface in form of the vessel-water interface data, the vessel-water interface data determined by the seam finder module may be modified such that all pixels, whose corresponding interface values are below the predetermined threshold, are determined as not showing the vessel-water interface.

According to an embodiment, the interface values and/or the vessel-water values are determined by a neural network, e.g., the second or, respectively the first and/or fourth neural network, as explained above.

According to an embodiment, the method further comprises modifying the image data depending on the determined vessel-water interface data such that the vessel-water interface is illustrated within the image when the image is shown on a display. For example, the image data may be modified depending on the vessel-water interface data such the vessel-water interface is highlighted within the image after the modification when the image is shown on the display. The vessel-water interface may be easily displayed within the image. However, displaying the vessel-water interface within the image may not be necessary for all applications which use the determined vessel-water interface. For example, the vessel-water interface does not have to be displayed on a display, if the vessel-water interface data are used for determining the positional relationship between the ego vessel and a target vessel on the water body.

An objective is achieved by a method for determining a positional relationship between the ego vessel and the target vessel in the waterbody, the ego vessel comprising a camera for capturing an image of the surroundings of the ego vessel, the method comprising: determining at least one vessel-water interface within the image in accordance with the above method; determining position data representative of a camera position and an orientation of the camera when the camera captured the image; determining pixel data of at least one image point on the vessel-water interface within the image from the image data; determining real-world coordinates of at least one real-world point of the vessel-water interface on the waterbody; and determining the positional relationship between the ego vessel and the target vessel depending on the position data and the real-world coordinates of the at least one real-world point of the vessel-water interface on the water surface.

It has to be understood that features of the method for determining the vessel-water interface between the at least one target vessel and the water surface of the waterbody as described in the above and in the following may be features of the method for determining the positional relationship between the ego vessel and the target vessel in the waterbody as described in the above and in the following.

The at least one vessel-water interface within the image may be determined by determining the corresponding vessel-water interface data, as explained above. The camera position may correspond to a position of a centre of the camera. The camera centre may be given by a pinhole of the camera. Before starting one of the above methods, the camera may be calibrated. In particular, the orientation and/or position of the camera relative to the ego vessel may be calibrated by any calibration method known to the person skilled in the art. In particular, an intrinsic and extrinsic calibration of the camera may be carried out, e.g., as described in the section "Camera Models and Calibration" from "Learning OpenCV", by Gary Bradski and Adrian Kaehler, Released September 2008 Publisher(s): O'Reilly Media, Inc., ISBN: 9780596516130. When the camera is calibrated, the position data are also representative of the position of the ego vessel, because there is a fixed spatial relationship between the camera and the ego vessel.

When carrying out the above methods, an ego-motion correction may be carried out for considering the motion of the ego vessel when determining the vessel-water interface and/or the positional relationship between the ego vessel and the target vessel. The ego-motion correction may be carried out by any ego-motion correction method known in the art.

The real-world coordinates of the real-world point of the vessel-water interface on the waterbody may be determined by any projection method known in the art, e.g. as explained and described in detail in a textbook about computer vision, e.g. "Multiple View Geometry in Computer Vision" by Richard Hartley and Andrew Zisserman, Second Edition, isbn-13 978-0-521-54051-3, e.g., PART I: Camera Geometry and Single View Geometry.

According to an embodiment, the real-world coordinates of the real-world point are determined by extrapolating the camera position of the camera through the image point to the water surface of the waterbody depending on the position data and the pixel data. For extrapolating the camera position through the image point of the image to the water surface, the image may be virtually arranged in an image plane, e.g., a virtual image plane, or a real plane of the camera, or in any other appropriate plane. The image plane of the camera may correspond to a sensor plane of the camera, e.g. a CCD-plane of the camera, if the camera is a CCD-camera. The virtual image plane may be arranged between the camera and the waterbody. In contrast, the image plane may be arranged behind the camera when seen from the waterbody, wherein in this case the real-world point may be determined by extrapolating the image point through the camera position to the water surface.

According to an embodiment, the positional relationship refers to a range, in other words a distance, between the ego vessel and the target vessel and/or to a bearing of the target vessel. The bearing of the target vessel may be a relative bearing or an absolute bearing. The relative bearing refers to an angle between a heading of the ego vessel and a line extending from the predetermined point on the ego vessel to the determined real-world point of the vessel-water interface. The absolute bearing refers to an angle between the cardinal direction north (referred to as "true north" in the following) and the line extending from the predetermined point on the ego vessel, e.g., the camera position or a centre of the ego vessel, to the determined real-world point of the vessel-water interface. In this context, the absolute bearing may be regarded as positional relationship between the ego vessel and the target vessel, because normally the heading of the ego vessel with respect to true north is known and because therefore, when the absolute bearing of the target vessel is known, the relative bearing between the ego vessel and the target vessel is also known.

According to an embodiment, the pixel data of the at least one image point are determined such that the image point corresponds to the real-world point of the vessel-water interface which is closest to the ego vessel. The real-world point of the vessel-water interface which is closest to the ego vessel may be determined by projecting all image points of the vessel-water interface within the image to a real-world coordinate system. Then the point in the real-world coordinate system that is closest to the ego-vessel may be determined. Once the real-world point of the vessel-water interface which is closest to the ego vessel is determined in the real-world coordinate system, the corresponding image point in an image coordinate system may be determined as there is a point-to-point correspondence between the image points in the image coordinate system and the corresponding real-world points in the real world.

An objective is achieved by the system for determining the positional relationship between the ego vessel and the target vessel in the waterbody, the system comprising: a camera for capturing an image of the surroundings of the ego vessel, the camera being arranged, e.g., installed, on the ego vessel; and a processing unit being coupled to the camera and being configured for carrying out the above method for determining the positional relationship between the ego vessel and the target vessel in the waterbody. Optionally, the processing unit may be arranged remote from the camera and/or the vessel. For example, the processing unit may be arranged in a computer of the vessel or in a server remote from the vessel.

It has to be understood that features of the method for determining the vessel-water interface between the at least one target vessel and the water surface of the waterbody and/or the features of the method for determining the positional relationship between the ego vessel and the target vessel in the waterbody, as described in the above and in the following, may be features of the system for determining the positional relationship between the ego vessel and the target vessel in the waterbody as described in the above and in the following.

Further, a computer program may be provided, the computer program comprising instructions configured for carrying out at least one of the above methods when the computer program is carried out by a processor of a computer or by the processing unit of the above system. It has to be understood that features of the methods as described in the above and in the following may be features of the computer program as described in the above and in the following.

Furthermore, a computer readable medium, on which the above computer program is stored, may be provided. It has to be understood that features of the methods as described in the above and in the following may be features of the computer readable medium as described in the above and in the following. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a block diagram illustrating an exemplary embodiment of a method for determining a vessel-water interface between at least one target vessel and a water surface of a waterbody;
Fig. 2 shows an example of an image showing a target vessel in a waterbody;
Fig. 3 shows an example of a visualization of vessel-water values determined from the image of figure 2;
Fig. 4 shows an example of a visualization of interface values determined from the vessel-water values visualized in figure 3;
Fig. 5 shows an example of an image showing the target vessel in the waterbody according to figure 2 and a bounding box around the target vessel;
Fig. 6 shows an example of a visualization of a vessel-water interface determined from the interface values visualized in figure 4 and the bounding box shown in figure 5;
Fig. 7 shows a flow diagram of an exemplary embodiment of a method for determining a positional relationship between an ego vessel and the target vessel in the waterbody;
Fig. 8 illustrates a principle of an exemplary embodiment of a method for determining the positional relationship between the ego vessel and the target vessel in the waterbody;
Fig. 9 shows a block diagram illustrating an exemplary embodiment of a method for determining the vessel-water interface between the at least one vessel and the water surface of the waterbody; and
Fig. 10 shows an example of a visualization of interface values determined from the image of figure 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

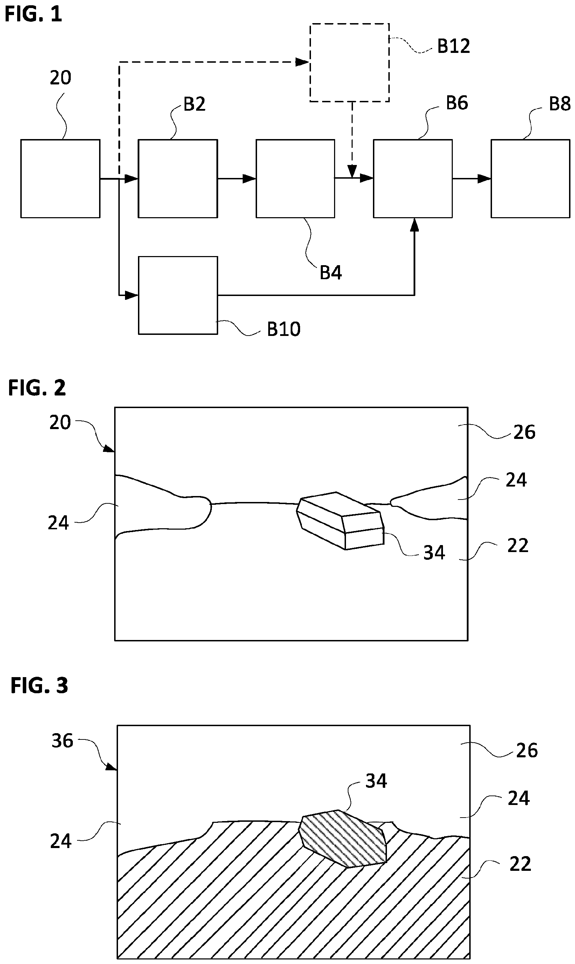

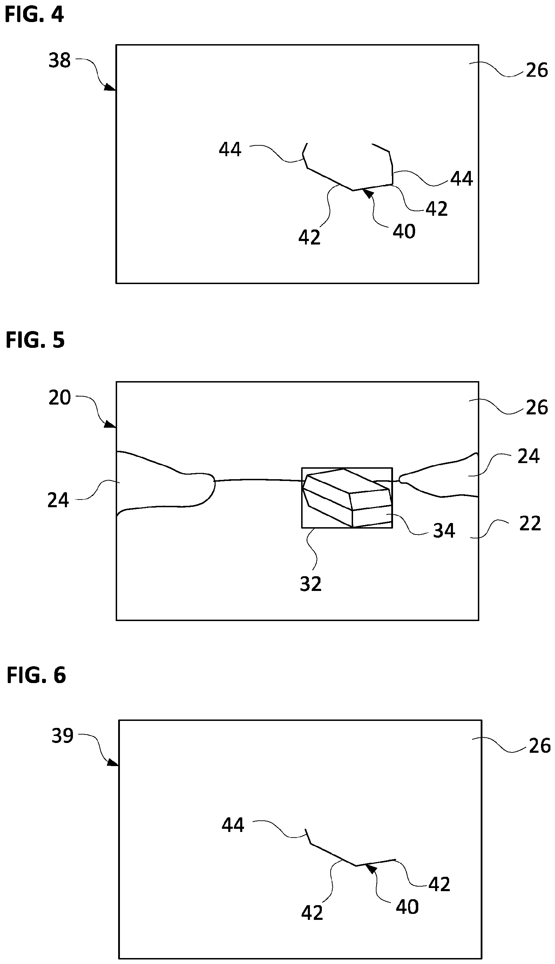

Fig. 1 shows a block diagram illustrating an exemplary embodiment of a method for determining a vessel-water interface 40 (see figure 4) between at least one target vessel 34 (see figure 2) and a water surface 22 of a waterbody in an image 20 (see figure 2). The method may be carried out by a processing unit of a general-purpose computer or by a processing unit of a system for determining a positional relationship between an ego vessel (not shown) and the target vessel 34 in a waterbody as described later. In the following, the target vessel 34 is referred to as "vessel" only, whereas the vessel on which a camera (not shown) for capturing the image 20 is arranged is referred to as "ego vessel". The waterbody may be a lake, an ocean, a sea, or a river.

In a first step of the method, the image 20 may be captured by the camera (not shown).

Fig. 2 shows an example of the image 20 showing the vessel 34 in the waterbody. In particular, from the image 20 it may be seen that the vessel 34 sails on the waterbody. The waterbody may be represented within the image 20 by the water surface 22 of the waterbody. The image 20 may show the water surface 22, land 24, e.g. two spits of land, the sky 26, and the vessel 34. There is only one continuous water surface 22 shown in the image 20. Another valid image 20 may show two or more water surfaces 22 separated from each other. There is only one vessel 34 shown in the image 20. Another valid image 20 may show two or more vessels 34 separated from or overlapping each other.

The camera may be arranged on the ego vessel. The camera may generate image data representing the image 20. The image data may be sent to and/or may be received by the processing unit carrying out the method for determining the vessel-water interface 40. The image data may be stored in a memory of the general-purpose computer or of the system, wherein the memory is coupled to the processing unit. When the method is carried out, the processing unit may receive the image data from the camera directly or from the memory. The camera may be calibrated with respect to a position and/or orientation of the camera relative to the ego vessel. In particular, the camera may be calibrated by extrinsic and intrinsic calibration. The position of the camera may comprise a height of the camera on the ego vessel. So, if a position and an orientation of the ego vessel are known, the position and orientation of the camera are known also.

A first neural network B2 may receive the image data and may be configured for determining at least one vessel-water value for each pixel of the image 20 from the image data. For example, the first neural network B2 may be configured for determining three or more vessel-water values for each pixel of the image. In particular, if the image 20 comprises an array of N x M pixels, N and M being natural numbers, the first neural network B2 may determine 3 x N x M vessel-water values assigned to the corresponding pixels. The vessel-water values are representative for a probability of the corresponding pixel showing the target vessel, the water surface 22, or none of both, e.g., the land 24, the sky 26, or void. The vessel-water values may be determined by semantic segmentation of the image 20. The semantic segmentation may be carried out by the first neural network B2 which has been trained on differentiating between water and vessels in images, e.g. by supervised learning using correspondingly labelled images. For example, the first neural network B2 may be trained in advance by a supervised training using an amount of images 20 showing vessels 34 on waterbodies and by the images 20 being labelled with respect to the corresponding water surfaces 22 and vessels 34. In addition, images 20 not showing any vessels 34 may also be involved in the training of the first neural network B2. Instead of using an amount of images 20 for the training, one-shot learning as it is known in the art may be applied for training the first neural network B2.

Fig. 3 shows an example of a visualization 36 of the vessel-water values determined from the image 20 of figure 2 by the first neural network B2. In particular, figure 3 shows a representation of a first segmentation output of the first neural network B2. The first segmentation output corresponds to the vessel-water values. With respect to the output of the first neural network B2, the last layer of the first neural network B2 may be a softmax function, for example. The softmax function may provide an output per pixel of the image 20 that may correspond to a triplet of probabilities, e.g., (x₀ , x₁, x₂), wherein the first value of the triplet having the index 0 may be representative for the probability that the corresponding pixel shows neither the water surface 22 nor the vessel 34, wherein the second value of the triplet having the index 1 may be representative for the probability that the corresponding pixel shows a part of the water surface 22, and wherein the value of the triplet having the index 2 may be representative for the probability that the corresponding pixel shows a part of the target vessel 34. The vessel-water values may be probability values reaching from 0 to 1 or from 0% to 100%. Alternatively, the vessel-water values may be convertible from or to these probability values and may reach from 0 to 1, from 0 to 10, from -5 to 5, or from negative to positive infinity, for example. In case of these vessel-water values being between 0 and 1, all vessel-water values of one triplet may sum up to 1. So, for example, if the output for one of the pixels is (0.1, 0.7, 0.2), a probability that that pixel shows neither a part of the water surface 22 nor a part of the vessel 34, a part of the water surface 22, or a part of the vessel 34 is 0.1, 0.7, and 0.2, respectively. If more classes than water surface, vessel, or none of both are needed, e.g., for the sky 26 or the land 24, correspondingly more than three vessel-water values may be determined per pixel.

To visualize the output of the semantic segmentation, as e.g., shown in figure 3, the output of the first neural network B2, i.e., the vessel-water values, may be assigned to different colours. For example, those indices of the vessel-water values within the triplets may be assigned to the corresponding pixels, which are representative of the vessel-water value representing the highest probability within the corresponding triplet. For example, when the first vessel-water value of the triplet has the highest probability within the triplet, "0" may be assigned to the corresponding pixel, when the second vessel-water value of the triplet has the highest probability within the triplet, "1" may be assigned to the corresponding pixel, and when the third vessel-water value of the triplet has the highest probability within the triplet, "2" may be assigned to the corresponding pixel. In the above example, the vessel-water value having the index 1, i.e., 0.7, is the highest value of the triplet and this vessel-water value is representative of the probability of the corresponding pixel showing a part of the water surface 22. So, in the above example, the value "1" may be assigned to the corresponding pixel showing the part of the water surface 22. Then, the numbers of "0", "1", or "2" assigned to the pixels may be assigned to different colours. For example, if the number assigned to one of the pixels is "1", a first colour, e.g., green, may be used for the corresponding pixel for the visualization 36, if the number assigned to that pixel is "2", a second colour, e.g., red, may be used for the corresponding pixel for the visualization 36.

For assigning those indices of the triplets of the vessel-water values to the corresponding pixels, which are representative of the vessel-water value of the corresponding triplet representing the highest probability, as explained above, an argmax function may be applied. In particular, the vessel-water values may be input into the argmax function. Then, the argmax function puts out the index of the vessel-water value representing the highest probability within the corresponding triplet for each corresponding pixel and the colours may be assigned to that output in order to achieve the visualization 36.

A post-processing module B4 may receive the output of the first neural network B2, i.e., the array of the vessel-water values, and may be configured for determining at least one interface value for each vessel-water value and thereby for each pixel of the image 20. So, the interface values may be determined by the post-processing module B4. In particular, proceeding with the above example, if the image 20 comprises the array of N x M pixels and if the output of the first neural network B2 provides a corresponding array of 3 x N x M vessel-water values, i.e., a 3D array, the post-processing module B4 determines an array of N x M interface values, i.e., a 2D array, assigned to the corresponding pixels and/or vessel-water values. The interface values are representative for a probability of the corresponding pixel showing a vessel-water interface 40 (see figure 4) between the vessel 34 and the water surface 22 or not.

So, the vessel-water values may form the 3D array. The first two dimension of this 3D array may correspond to spatial dimensions of the image 20, and the last dimension may refer to three channels corresponding to the vessel 34, the water surface 22, and none of both. The post-processing module B4 may determine the interface values from the vessel-water values by extracting the vessel-water values corresponding to the vessel 34 and corresponding to the water surface 22 from the 3D array. The extracted values may form two 2D arrays, one for the vessel-water values corresponding to the vessel 34 and one for the vessel-water values corresponding to the water surface 22, with the two dimensions of the 2D array corresponding to the spatial dimension of the image 20. Then, these 2D arrays may be pixel-wisely multiplied with each other to obtain another 2D array with the resulting 2D array containing one interface value per pixel, where the multiplication is defined as Hadamard product. The two dimensions of the resulting 2D array may correspond to the spatial dimension of the image 20.

For example, assuming one of the pixels has the vessel-water values of water°=°0.4, vessel°=°0.5, and "none of both"°=°0.1. Then, for this pixel, the vessel-water value being representative for the probability of that pixel showing the water surface 22 and the vessel-water value being representative for the probability of that pixel showing the vessel 34 are multiplied with each other, i.e., 0.4°^{∗}°0.5°=°0.2. So, in the resulting 2D array, the interface value for the considered pixel is 0.2. This procedure may be repeated for every pixel in the image 22, or at least in an area of interest, e.g., in the bounding box 32.

However, many alternative solutions are possible, because there are many ways to define a reasonable function to convert the three vessel-water values per pixel to a single interface value per pixel. For example, an alternative solution may be based on modelling the vessel-water values with a Dirichlet distribution.

The interface values may be probability values reaching from 0 to 1 or from 0% to 100%. Alternatively, the interface values may be convertible from or to these probability values and may reach from 0 to 10, from -5 to 5, or from negative to positive infinity, for example. Instead of determining the interface values from the vessel-water values by the above-described post-processing, the interface values may be determined by another neural network (not shown), e.g., a fourth neural network. The fourth neural network may be trained by a training dataset comprising vessel-water values of an amount of arrays of vessel-water values. Instead of using the amount of arrays, one-shot learning as it is known in the art may be applied when training the other neural network.

Fig. 4 shows an example of a visualization 38 of the interface values determined from the vessel-water values visualized in figure 3. In particular, figure 4 shows an output of the post-processing module B4. The output corresponds to the interface values. The interface values may be binary values, wherein the binary 1 may be assigned to all pixels showing the vessel-water interface and wherein the binary 0 may be assigned to all pixels not showing the vessel-water interface. Then, for providing the visualization 38, the first colour may be assigned to all pixels showing the vessel-water interface 40 and the second colour or no colour may be assigned to all pixels not showing the vessel-water interface 40.

The vessel-water interface 40 may comprise a physical vessel-water interface 42 and a virtual vessel-water interface 44. The physical vessel-water interface 42 corresponds to the vessel-water interface in the real world at which the water surface 22 is in direct physical contact to the vessel 34. The virtual vessel-water interface 44 corresponds to the vessel-water interface 40 in the image 20 at which pixels showing the water surface 22 are the next neighbours to pixels showing the vessel 34, wherein in the real world the corresponding areas of a surface of the vessel 34 do not have any direct contact to the water surface 22.

Fig. 5 shows an example of the image 20 showing the target vessel 34 in the waterbody according to figure 2 and a bounding box 32 around the target vessel 34.

An object detection module B10 may be provided and may be configured for determining bounding box data of the bounding box 32 surrounding the vessel 34 within the image 20 from the image data. The bounding box data may be determined by an object detection algorithm represented by the object detection module B10. The bounding box data may be determined before, after, or at the same time as the interface values. If there are more than one target vessel 34 in the image 20, correspondingly more bounding boxes 32 may be determined, e.g., one for each target vessel 34. The object detection algorithm may be any conventional object detection algorithm which is able to detect vessels 34 in images 20. The object detection algorithm may be a neural network, e.g., referred to as third neural network. The third neural network may have been trained in advance, such that it is able to detect and mark vessels 34 in images 20. For example, the third neural network may have been trained by a training dataset comprising an amount of correspondingly labelled images, or by one-shot learning as it is known in the art. The bounding box data may be matched to the image data such that the bounding box 32 surrounds the vessel 34 in the image 20 when the image 20 is displayed on a display. Preferably, the bounding box data are determined such that the corresponding vessel 34 exactly fits into the corresponding bounding box 32, as it is usual for bounding boxes determined by object detection algorithms as they are known in the art. Alternatively or additionally, the bounding box data may be matched to the vessel-water interface data such that the bounding box 32 surrounds the vessel-water interface 40 in the visualisation 39 of the vessel-water interface 40, when the visualisation 39 of the vessel-water interface 40 is displayed on a display.

As an alternative to using the object detection algorithm to determine the bounding box data, the bounding box data may be determined by instance segmentation. In this case, the bounding box data may be extracted from the output of the instance segmentation. For example, the outermost pixels in x- and y-direction of the target vessel identified by the instance segmentation may be used for determining the bounding box data and thereby the bounding box around the target vessel. In particular, the bounding box data may be determined such that the corresponding bounding box comprises these outermost pixels. An instance segmentation algorithm carrying out the instance segmentation may be any instance segmentation algorithm known in the art which is able to detect vessels in images. In particular, the instance segmentation algorithm may be another neural network which has been trained to detect vessels in images by a training dataset comprising an amount of images showing vessels, in particular vessels on corresponding waterbodies. An appropriate example for the instance segmentation is described in the paper "Mask R-CNN", by He, K., Gkioxari, G., Dollar, P. and Girshick, R., 2017, In Proceedings of the IEEE international conference on computer vision (pp. 2961-2969).

As an alternative to the first or second neural network using semantic segmentation for determining the vessel-water values or, respectively, the interface values in one step and the third neural network or the instance segmentation for determining the bounding box data in another step, the first and/or second neural network may use panoptic segmentation which enables determining the vessel-water values or, respectively, the interface values and the bounding box data in one step and/or by the corresponding neural network only, in particular without the need for the third neural network or the instance segmentation. Basically, panoptic segmentation is a combination of instance segmentation and semantic segmentation. Hence, panoptic segmentation can be used to replace both object detection and semantic segmentation. For example, panoptic segmentation may be used as described in the paper "UPSNet: A Unified Panoptic Segmentation Network ", by Yuwen Xiong et al., CVPR 2019.

A seam finder module B6 may be configured for determining vessel-water interface data representative for the vessel-water interface 40 depending on the interface values provided by the post-processing module B4 and on the bounding box data, for example provided by the object detection module B10. In order to determine the vessel-water interface data from the interface values, the interface values may be interpreted as costs or rewards and the vessel-water interface data are determined by minimizing the costs or, respectively, by maximizing the rewards. The costs may be minimized or, respectively, the rewards may be maximized by the seam finder module B6. In this embodiment, the interface values may be used as an input for the seam finder module B6. As described above, the interface values form a 2D array of interface values, with positions of the interface values within the array corresponding to positions of the corresponding pixels within the image 20. The vessel-water interface data determined by the seam finder module B6 may comprise x-y-coordinates, or pairs of columns and row numbers of the pixels of the image 20 showing the vessel-water interface 40 within the image 20. The vessel-water interface data may be representative for the position and extension of the vessel-water interface 40 within the image 20. The seam finder module B6 may for example use seam carving, dynamic programming, or one of other methods known in the art, such as those from graph theory, e.g., Dijkstra's algorithm, for determining the vessel-water interface data.

The costs and the rewards each may refer to a sum of the interface values of all pixels which are necessary to pixel-wisely go from one column of the array of the interface values corresponding to one lateral side of the bounding box 32 to another column of the array corresponding to another lateral side of the bounding box 32. In other words, the seam finder module B6 may run from the one column to the other column of the array of interface values in order to minimize the costs or to maximize the rewards. The one column may correspond to the left side of the bounding box 32 and the other column may correspond to the right side of the bounding box 32. Figuratively speaking, the seam finder module B6 may search for the cheapest way from the left side of the bounding box 32 to the right side of the bounding box 32, when calculating the costs, or may search for the most valuable way from the one column of the array to the other column of the array, when calculating the rewards. Alternatively, the seam finder module B6 may run from the right to the left side of the bounding box 32. If there are more than one vessel 34 and correspondingly more than one bounding box 32, the seam finder module B6 may run for each determined bounding box 32, i.e., for each determined vessel 34, separately and may determine the vessel-water interface data per bounding box 32, i.e., per vessel 34.

Fig. 6 shows an example of a visualization 39 of a vessel-water interface 40 determined from the interface values visualized in figure 4 and the bounding box data visualized as the bounding box 32 in figure 5, in particular by the seam finder module B6. In other words, figure 6 may show the visualization 39 of an output of the seam finder module B6. As may be seen from figure 6, at least a part of the virtual vessel-water interface 44 may be removed from the vessel-water interface 40 by the seam finder module B6 such that the determined vessel-water interface 40 fits to real world more accurately.

An output module B8 may be configured to output the vessel-water interface 40, e.g., in form of the visualization 39 of the vessel-water interface 40, within the image 20, or as raw data, in particular without showing the visualization 39 of the vessel-water interface 40 and/or the image 20 on a display.

Optionally, the output module B8 may be configured for modifying the image data depending on the determined vessel-water interface data such that the vessel-water interface 40 may be illustrated within the image 20 when the image 20 is shown on a display (not shown). For example, the image data may be modified depending on the vessel-water interface data such the vessel-water interface 40 is highlighted within the image 20 after the modification when the image 20 is shown on the display.

So, the vessel-water interface 40 may be easily displayed within the image 20 and/or within the visualization 39 of the vessel-water interface 40. However, displaying the vessel-water interface 40 within the image 20 or within the visualization 39 of the vessel-water interface 40 may not be necessary for all applications which use the determined vessel-water interface 40. For example, the vessel-water interface 40 does not have to be displayed on a display, if the vessel-water interface data are used for determining a positional relationship between the ego vessel and the target vessel 34 on the waterbody. In this case, knowledge of the vessel-water interface data may be sufficient to determine the positional relationship between the ego vessel and the target vessel 34.

Optionally, an edge detection module B12 may be provided and may be configured for determining edge values from the image data. The edge detection module B12 may comprise any software for finding edges in images 20 as it is known in the art. For example, one possible edge detection method is explained in "Digital Image Processing" by Rafael Gonzalez (Author), Richard Woods (Author), Third Edition, ISBN 9780131687288, wherein the edge values may be obtained by computing the magnitude of a gradient as described in Section 10.2.5, "Basic Edge Detection", and may be combined with a threshold as described in the same section. Alternatively, one may use more advanced techniques such as those described in Section 10.2.6, "More Advanced Techniques for Edge Detection", such as e.g., "The Canny edge detector". The output from the edge detection module B12 may be given by binary values, e.g., 1 for all pixels showing an edge and 0 for all pixels not showing an edge. Alternatively, an edge magnitude may be used to express the result of the edge detection. The edge magnitude is a measure of an edge strength of the corresponding pixel, typically a gradient magnitude, which provides a non-binary value per pixel of the image 20. The resulting edge values may be multiplied with the interface values, e.g., by pixel-wise multiplication.

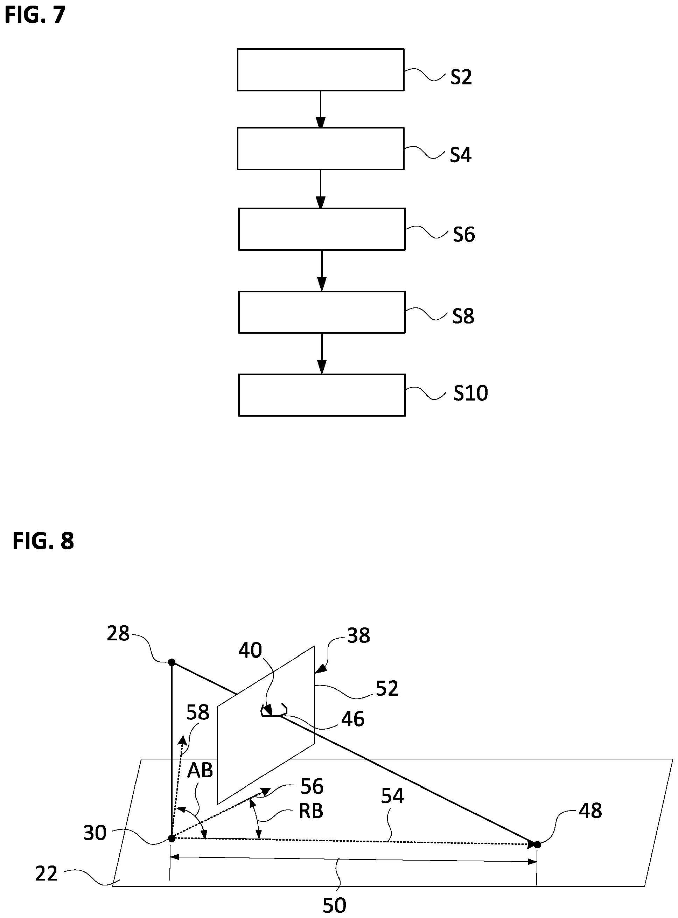

Fig. 7 shows a flow diagram of an exemplary embodiment of a method for determining a positional relationship between the ego vessel and the target vessel 34 in the waterbody. The positional relationship between the ego vessel and the target vessel 34 may refer to a range 50 (see figure 8) between the ego vessel and the target vessel 34 and/or to a bearing RB, AB (see figure 8) of the target vessel 34. To carry out this method, the ego vessel may comprise the system for determining the positional relationship between the ego vessel and the vessel 34 in the waterbody. The system may comprise the camera for capturing the image 20 of the surroundings of the ego vessel, with the camera being arranged on the ego vessel. The system may further comprise the processing unit coupled to the camera and being configured for carrying out the following method. Before starting the method, the camera, in particular an orientation and/or position of the camera relative to the ego vessel, may be calibrated such that there is a fixed and/or known spatial relationship between the camera and the ego vessel. When carrying out the method, an ego-motion correction may be carried out for considering the motion of the ego vessel when determining the positional relationship to the target vessel 34.

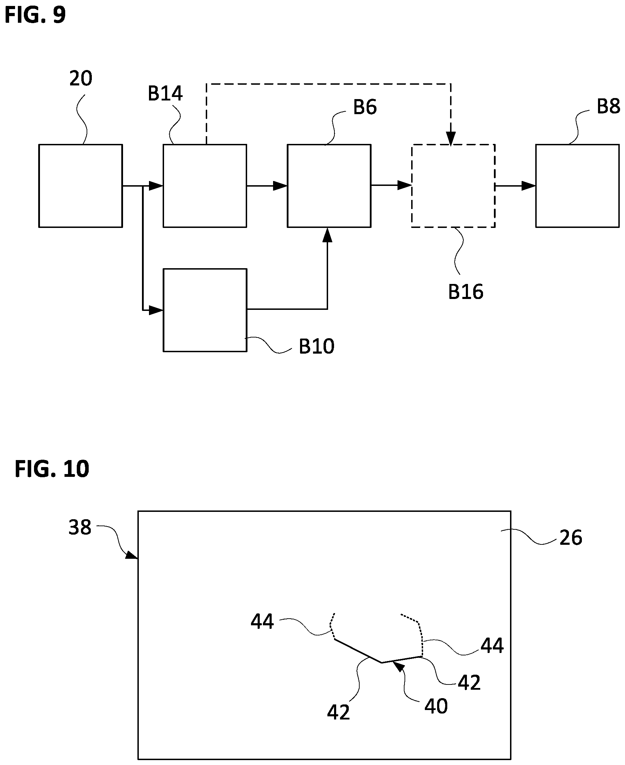

In a step S2, the at least one vessel-water interface 40 within the image 20 is determined, e.g. by the above method explained with respect to figures 1 to 6 or by the below method explained with respect to figures 9 and 10. The at least one vessel-water interface 40 within the image 20 may be determined by determining the corresponding vessel-water interface data.

In a step S4, position data are determined, wherein the position data may be representative for a camera position 28 (see figure 7) and camera orientation of the camera when the camera captured the image 20. The camera position 28 of the camera may correspond to a position of a centre of the camera. The camera centre may be given by a pinhole of the camera. The position data may also be representative of a position of the ego vessel, i.e., an ego vessel position 30, because of the fixed and/or known spatial relationship between the camera and the ego vessel.

Fig. 8 illustrates a principle of an exemplary embodiment of the method for determining the positional relationship between the ego vessel and the target vessel 34 in the waterbody. From figure 8 it may be seen that the camera is arranged on a camera position 28. The camera may be calibrated such that a spatial relationship between the camera position 28 and an ego vessel position 30 of the ego vessel is fixed and/or known. For example, a projection of the camera position 28 to the water surface 22 may be regarded as ego vessel position 30. Alternatively, any other point of the ego vessel on the water surface 22 with a fixed and/or known spatial relationship to the camera position 28 may be regarded as ego vessel position 30, e.g., a centre of the ego vessel.

An image plane of the camera may correspond to a sensor plane of the camera, e.g. a CCD-plane of the camera, if the camera is a CCD-camera. A virtual image plane 52 may be arranged between the camera and the waterbody. The visualization 39 or the image 20 showing the vessel-water interface 40 may be arranged in the virtual image plane 52 of the camera.

In a step S6, pixel data of at least one image point 46 on the vessel-water interface 40 within the visualization 39 of the vessel-water interface 40 or within the image 20 may be determined from the vessel-water interface data or from the modified image data. The pixel data of the at least one image point 46 may be determined such that the image point 46 corresponds to a real-world point 48 of the vessel-water interface 40 which is closest to the ego vessel. The real-world point 48 of the vessel-water interface 40 which is closest to the ego vessel may be determined by projecting all image points of the vessel-water interface 40 within the image 20 to a real-world coordinate system. Then, the point in the world coordinate system that is closest to the ego vessel may be determined. Once the real-world point 48 of the vessel-water interface 40 which is closest to the ego vessel is determined in the world coordinate system, the corresponding image point in an image coordinate system may be determined as there is a point-to-point correspondence between the image points and the corresponding real-world points.

In a step S8 real-world coordinates of the at least one real-world point 48 of the vessel-water interface 40 on the waterbody may be determined by extrapolating the camera position 28 of the camera through the image point 46 to the water surface 22 of the waterbody depending on the position data and the pixel data, with the image being in the virtual image plane 52 of the camera. The real-world coordinates of the real-world point 48 of the vessel-water interface 40 on the waterbody may be determined by any projection method known in the art, e.g. as explained and described in detail in a textbook about computer vision, e.g. "Multiple View Geometry in Computer Vision" by Richard Hartley and Andrew Zisserman, Second Edition, isbn-13 978-0-521-54051-3, e.g., PART I: Camera Geometry and Single View Geometry.

In a step S10, the positional relationship between the ego vessel and the target vessel 34, i.e., a range 50 and/or a bearing RB, AB between the ego vessel and the target vessel 34, may be determined depending on the real-world coordinates of the at least one real-world point 48 of the vessel-water interface 40 on the water surface 22 and on the ego vessel position 30.

The bearing of the target vessel 34 may be a relative bearing RB or an absolute bearing AB. The relative bearing RB may refer or correspond to an angle between a heading 56 of the ego vessel, i.e., an orientation of the ego vessel with respect to true north 58, and a line 54 extending from a predetermined point on the ego vessel, e.g., the ego vessel position 30 or the camera position 28, to the determined real-world point 48 of the vessel-water interface 40. The absolute bearing AB may refer to an angle between true north 58 and the line 54. In this context, the absolute bearing AB may also be regarded as positional relationship between the ego vessel and the target vessel 34, because normally the heading 56 of the ego vessel with respect to true north 58 is known and because therefore, when the absolute bearing AB of the target vessel 34 is known, the relative bearing RB between the ego vessel and the target vessel 34 is also known.

Fig. 9 shows a block diagram illustrating an exemplary embodiment of a method for determining the vessel-water interface 40 between the at least one vessel 34 and the waterbody. Some of the method steps and some of the modules carrying out the corresponding method steps may correspond to the method steps and modules as explained with respect to figures 1 to 6. Therefore, only those method steps and modules are explained in the following in which the method explained with respect to figures 9 and 10 differs from the method explained with respect to figures 1 to 6.

In this embodiment, a neural network, i.e., a second neural network B 14, may receive the image data of the image 20 and may be configured for generating the interface values directly depending on the image data. In this context, the second neural network B14 may be configured for determining at least one interface value for each pixel of the image 20, the interface value being representative for the probability of the corresponding pixel showing the vessel-water interface 40 or not. For example, the second neural network B14 may be trained in advance by a supervised learning using an amount of images 20 showing vessels 34 on waterbodies and by the images 20 being labelled with respect to the corresponding vessel-water interfaces 40. In particular, the second neural network B 14 may be trained such that it only detects the physical vessel-water interface 42 and not the virtual vessel-water interface 44. Instead of using an amount of labelled images 20 for training the second neural network B14, the second neural network B14 may be trained by one-shot learning as it is known in the art.

Fig. 10 shows an example of an illustration showing the vessel-water interface 40 determined by the second neural network B14, wherein the virtual vessel-water interface 44 is shown in figure 10 by dashed lines for information only. The generated vessel-water interface data may not comprise any information corresponding to the virtual vessel-water interface 44.

Optionally, a threshold module B 16 may be arranged. The threshold module B 16 may be configured for determining all pixels, whose corresponding interface values are below a predetermined threshold, as not showing the vessel-water interface. In other words, the threshold module B16 may be configured for setting all interface values below a predetermined threshold to that interface value which is representative for the probability of the corresponding pixel not showing the vessel-water interface 40, e.g., to zero. Thus, before outputting the position and extension of the vessel-water interface 40 in form of the vessel-water interface data, the vessel-water interface data determined by the second neural network B 14 may be modified by the threshold module B 16 such that all pixels, whose corresponding interface values are below the predetermined threshold, are determined as not showing the vessel-water interface 40.

The neural networks and modules mentioned above, e.g. the first neural network B2, the second neural network B 14, the third and/or fourth neural network, the seam finder module B6, the output module B8, the object detection module B10, the edge detection module B12, and/or the threshold module B16, each may be implemented by software, hardware, or a combination of software and hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processing unit or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: image
- 22: water surface
- 24: land
- 26: sky
- 28: camera position
- 30: ego vessel position
- 32: bounding box
- 34: target vessel
- 36: visualization of vessel-water values
- 38: visualization of interface values
- 39: visualization of vessel-water interface
- 40: vessel-water interface
- 42: physical vessel-water interface
- 44: virtual vessel-water interface
- 46: image point
- 48: real-world point
- 50: range
- 52: virtual image plane
- 54: line
- 56: heading ego vessel
- 58: true north
- AB: absolute bearing
- RB: relative bearing
- B2: first neural network
- B4: post-processing module
- B6: seam finder module
- B8: output module
- B10: object detection module
- B12: edge detection module
- B14: second neural network
- B16: threshold module

## Claims

1. Method for determining a vessel-water interface (40) between at least one target vessel (34) and a water surface (22) of a waterbody, on which the target vessel (34) sails, from an image (20) showing the target vessel (34) on the waterbody, the method comprising:
receiving image data of the image (20),
determining interface values for pixels of the image (20), the interface values being representative for a probability of the corresponding pixels showing the vessel-water interface (40) or not;
determining bounding box data of a bounding box (32) surrounding the target vessel (34) within the image (20) from the image data;
and
determining vessel-water interface data, the vessel-water interface data being representative for a position and extension of the vessel-water interface (40) within the image (20), depending on the determined interface values and the bounding box data.

2. Method in accordance with claim 1, wherein
the interface values are interpreted as costs or rewards and the vessel-water interface data are determined by minimizing the costs or, respectively, by maximizing the rewards.

3. Method in accordance with claim 2, wherein
the interface values form an array of interface values, with positions of the interface values within the array corresponding to positions of the corresponding pixels within the image, and
the costs and the rewards each refer to a sum or product of the interface values of all pixels which are necessary to pixel-wisely go from one lateral side of the array corresponding to one lateral side of the bounding box (32) to another lateral side of the array corresponding to another lateral side of the bounding box (32).

4. Method in accordance with one of the preceding claims, wherein the bounding box data are determined by an object detection algorithm configured for detecting vessels in images (20) or by instance segmentation.

5. Method in accordance with one of the preceding claims, the method further comprising, after receiving the image data and before determining the vessel-water interface data:
determining vessel-water values for the pixels of the image (20) from the image data, the vessel-water values being representative for a probability of the corresponding pixels showing the target vessel (34), the water surface (22), or none of both; and
determining the interface values from the vessel-water values.

6. Method in accordance with one of the preceding claims, the method further comprising, after receiving the image data and before determining the vessel-water interface data:
determining edge values for the pixels of the image (20), the edge values being representative for the corresponding pixels showing an edge within the image (20) or not; and
determining the vessel-water interface data depending on the edge values.

7. Method in accordance with claim 6, wherein the vessel-water interface data are determined depending on the edge values by
pixel-wisely multiplying the interface values with the corresponding edge values and by determining the vessel-water interface data depending on the corresponding products; or
pixel-wisely adding the interface values to the corresponding edge values and by determining the vessel-water interface data depending on the corresponding sums.

8. Method in accordance with one of the preceding claims, further comprising:
determining all pixels, whose corresponding interface values are below a predetermined threshold, as not showing the vessel-water interface (40).

9. Method in accordance with one of the preceding claims, wherein
the interface values and/or the vessel-water values are determined by a neural network.

10. Method in accordance with one of the preceding claims, wherein
the vessel-water interface data comprise positions and/or coordinates of the pixels showing the vessel-water interface (40) within the image (20).

11. Method in accordance with one of the preceding claims, further comprising:
modifying the image data depending on the determined vessel-water interface data such that the vessel-water interface (40) is illustrated within the image (20) when the image (20) is shown on a display

12. Method for determining a positional relationship between an ego vessel in a waterbody and a target vessel (34) in the waterbody, the ego vessel comprising a camera for capturing an image (20) of the surroundings of the ego vessel, the method comprising:
determining at least one vessel-water interface (40) within the image (20) in accordance with one of the preceding claims;
determining position data representative of a camera position (28) and an orientation of the camera when the camera captured the image (20);
determining pixel data of at least one image point (46) on the vessel-water interface (40) within the image (20) from the image data;
determining real-world coordinates of at least one real-world point (48) of the vessel-water interface (40) on the waterbody; and
determining the positional relationship between the ego vessel and the target vessel (34) depending on the position data and the real-world coordinates of the at least one real-world point (48) of the vessel-water interface (40) on the water surface (22).

13. Method in accordance with claim 12, wherein
the real-world coordinates of the real-world point (48) are determined by extrapolating the camera position (28) of the camera through the image point (46) to a water surface (22) of the waterbody depending on the position data and the pixel data.

14. Method in accordance with one of claims 12 or 13, wherein
the positional relationship refers to a range (50) between the ego vessel and the target vessel (34) and/or to a bearing (AB, RB) of the target vessel (34).

15. Method in accordance with one of claims 12 to 14, wherein
the pixel data of the at least one image point (46) are determined such that the image point (46) corresponds to the real-world point (48) of the vessel-water interface (40) which is closest to the ego vessel.

16. System for determining a positional relationship between an ego vessel in a waterbody and a target vessel (34) in the waterbody, the system comprising:
a camera for capturing an image (20) of the surroundings of the ego vessel, the camera being arranged on the ego vessel; and
a processing unit being coupled to the camera and being configured for carrying out the method in accordance with one of claims 12 to 15.
